# EUROPEAN PATENT APPLICATION

(11) **EP 1 545 119 A1**
(43) Date of publication of application: **22.06.2005**
(21) Application number: 04029891.1
(22) Date of filing: 16.12.2004
(51) Int. Cl.: H04N 1/10

(54) **Image reading apparatus and image reading method**

(30) Priority: 17.12.2003 JP 2003419969
(71) Applicant: Hitachi Software Engineering Co., Ltd., Yokohama-shi, Kanagawa 230-0045 (JP)
(72) Inventor: Oishi, Takeshi, Shinagawa-ku Tokyo 140-0002 (JP)
(74) Representative: Liesegang, Roland, Dr.-Ing.

(57) **Abstract**

Sensitivity error, image distortion, and background noise upon synthesizing images obtained by an imaging apparatus, and lack of resolution upon reading the entire area of a sample at a time are solved. While moving the sample by the distance that corresponds to the resolution, the sample is read using all the scanning lines of the imaging apparatus, and then an entire image is obtained by synthesizing each line. The imaging apparatus is located such that the scanning lines are parallel to the short side of the sample, and the short side direction is resolved by the maximum resolution of the imaging apparatus.

## Description

### BACKGROUND OF THE INVENTION

### Field of the Invention

The present invention relates to an image reading apparatus and an image reading method, and to an image reading apparatus and an image reading method that are suitable for reading a fluorescent-labeled sample.

### Background Art

As imaging methods when reading fluorescence of a microarray by a CCD sensor after a hybridization reaction, there are a method by which the entire area of the microarray is put into one visual field for reading, and a method by which the microarray is divided for reading and an image is synthesized afterward. In the former case, the maximum resolution upon imaging is limited in accordance with the length of a diagonal line of the microarray, since the diagonal line of the microarray must be within the imaging range of the CCD sensor. In the latter case, higher resolution can be obtained, since smaller ranges of the microarray are put into the imaging range of the CCD sensor.
Patent Document 1: JP Patent Publication (Kokai) No. 2003-298952 A
Patent Document 2: JP Patent Publication (Kokai) No. 2002-286643 A
Patent Document 3: JP Patent Publication (Kokai) No. 2002-142151 A
Patent Document 4: JP Patent Publication (Kokai) No. 2003-262588 A

### SUMMARY OF THE INVENTION

Meanwhile, it may pose problems upon synthesizing the divided images. Specifically, the joints of images have different brightness when the images are synthesized if uniform fluorescence intensity cannot be obtained in the entire imaging area due to the unevenness of excitation light. Also, a portion of the image is duplicated or lost when the images are synthesized, since distortion is generated in the images due to the aberration of a lens. Further, when detecting low concentrated fluorescent materials by the CCD censor, long exposure time is required, so that background noise increases, since the CCD sensor has lower sensitivity as compared with a photomultiplier tube.

In the method by which excitation light is irradiated onto the entire imaging area of the microarray, a field on the microarray that corresponds to one pixel of the imaging area of the CCD sensor may be affected by fluorescence emitted from peripheral fields. Although the imaging area of an imaging apparatus has a structure where imaging devices are arrayed in a two-dimensional plane, the sensitivity of each imaging device may not be uniform. Thus, the unevenness of sensitivity may be generated in an imaging result.

Although the CCD sensor and the microarray are used as examples for description, the same holds true for other two-dimensional imaging apparatuses and fluorescent-labeled samples. In light of the problems in the prior art, it is an object of the present invention to provide an image reading apparatus and an image reading method that are capable of obtaining a sample image in high resolution without being affected by the unevenness of sensitivity of the two-dimensional imaging apparatus

The imaging apparatus is described with reference to an apparatus that scans the imaging devices arrayed two dimensionally one line at a time and detects accumulated electric charges. A sample to be imaged is moved perpendicularly to the scanning direction of the imaging area, for example. When all the lines of the imaging area are scanned, the sample is moved by the distance that corresponds to one pixel of the imaging devices and all the lines of the imaging area are scanned again. This operation is repeated until the scanning of the entire area of the sample ends. Images obtained by the operation are each displaced by one pixel in the movement direction of the sample. Each image includes a pixel array resulting from the scanning of the same portion of the sample area. Thus, the image of an object pixel array is obtained by averaging the pixel arrays. This operation is performed in all the pixel arrays that correspond to the sample area. By performing the operation, the entire area of the sample area is to be repeatedly read as many as the number of the scanning lines of the imaging devices, and a final image is constructed on the basis of the average thereof.

As a result, fields on the sample area that correspond to each pixel of the imaging area of the imaging apparatus are imaged by all the imaging devices disposed parallel to the movement direction of the sample. The problem of the unevenness of sensitivity upon synthesizing the images can be solved by averaging the difference of sensitivity among these imaging devices.

Also, a telecentric lens that has substantially low level of lens aberration is employed in order to solve the problems of the aforementioned image distortion upon image synthesis and emission leak at pixels adjacent to each other. The telecentric lens has small aberration and allows only near-parallel light to pass, so that the influence of the fluorescent leak from the adjacent imaging fields can be reduced.

The image reading apparatus according to the present invention comprises a sample stage for holding a sample, a two-dimensional imaging apparatus for imaging the sample held by the sample stage, a sample stage driving unit for moving the sample stage by the distance that corresponds to the width of one pixel of a sample image imaged by the two-dimensional imaging apparatus, a memory unit for storing a plurality of images imaged by the two-dimensional imaging apparatus, the imaging fields of the images being displaced by the distance that corresponds to the width of one pixel, and an image synthesis unit for synthesizing the sample image by obtaining an average of a plurality of pixel values for individual locations on the sample from the plurality of images stored in the memory unit, and then by using the average pixel values thereof. Preferably, the two-dimensional imaging apparatus images the sample via a telecentric optical system.

The image reading method according to the present invention comprises a first step for imaging a sample image by the two-dimensional imaging apparatus, a second step for moving the sample by the distance that corresponds to the width of one pixel of the sample image to be imaged by the two-dimensional imaging apparatus, a step for storing a plurality of images by repeating the first step and the second step for predetermined times, a step for obtaining an average of a plurality of pixel values for the individual locations on the sample by integrating the pixel values of the plurality of stored images in each corresponding pixel while dislocating each image by one line, and a step for synthesizing the sample image based on the average pixel values in the individual locations on the sample. The first step and the second step can be repeated such that the entire area of the imaging fields of the sample is imaged in the direction perpendicular to all the scanning lines of the two-dimensional imaging apparatus.

According to the present invention, a high resolution or low noise image can be obtained without having the difference of brightness in the peripheral portions of the imaging range as compared with the method for imaging the entire area of a slide glass at a time. Also, as compared with the method for imaging an object sample by dividing it, resolution equivalent to that of the method can be provided, and an image can be obtained without joints and the difference of brightness in the long side direction.

### BRIEF DESCRIPTION OF THE DRAWINGS

Fig. 1 shows a block diagram of the outline example of the image reading apparatus according to the present invention.
Fig. 2 shows a block diagram of an example of the electrical system of the image reading apparatus according to the present invention.
Fig. 3 shows a schematic diagram of an example of the image reading apparatus according to the present invention.
Fig. 4 shows an illustration to describe an example of the optical system.
Fig. 5 shows an illustration to describe the telecentric lens.
Fig. 6 shows an example of a method for irradiating excitation light using optical fibers.
Fig. 7 shows an illustration of a reading time chart.
Fig. 8 shows illustrations of the sample, the start location and the end location of a light-receiving portion, and the outline of a reading method.
Fig. 9 shows an illustration of the corresponding locations between the sample area and the imaging devices.
Fig. 10 shows illustrations of the sample reading method and the image synthesizing method.

### DESCRIPTION OF THE PREFERRED EMBODIMENTS

In the following, embodiment of the present invention is described with reference to the drawings.

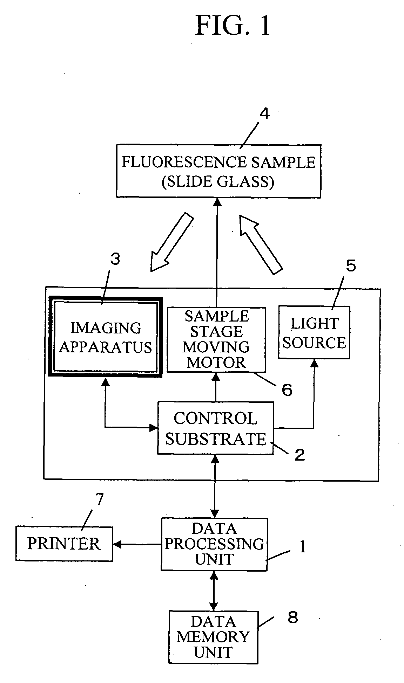

Fig. 1 shows a block diagram of the outline example of the image reading apparatus according to the present invention. Excitation light emitted from a light source 5 is irradiated onto a sample (slide glass) 4. Fluorescence from the sample 4 is detected by a two-dimensional imaging apparatus 3 such as a CCD, and then converted into an electric signal to be transferred to a control substrate 2. A sample stage that supports the sample 4 is moved on a reading position by a sample stage moving motor 6. In the present embodiment, a stepping motor is employed for the sample stage moving motor 6. The sample stage moving motor 6 is controlled by the control substrate 2 and the control substrate 2 is controlled by a data processing unit 1. The data processing unit 1 is connected to a data memory unit 8 and processed data can be stored in the data memory unit 8. Also, the data processing unit 1 is connected to a printer 7 and obtained images and analysis data, for example, can be output to the printer 7.

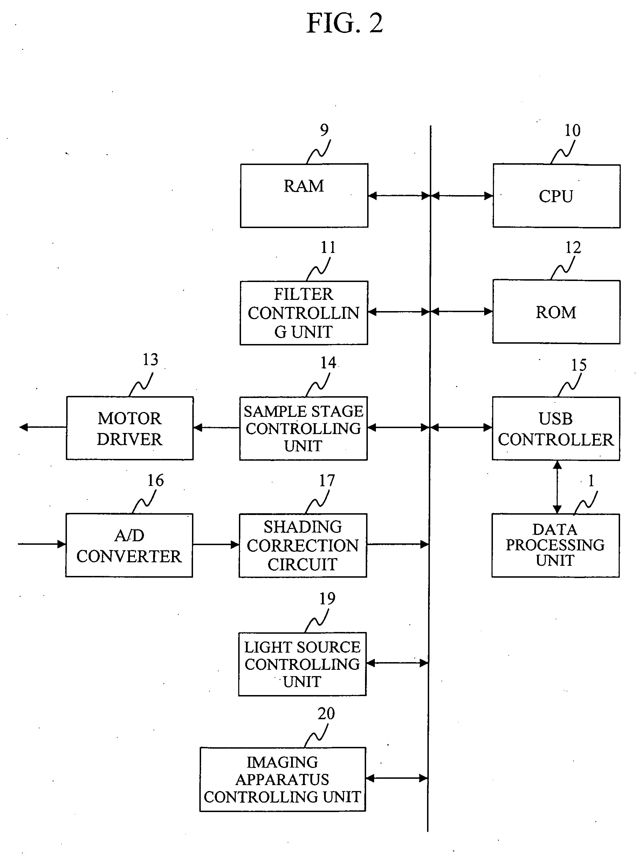

Fig. 2 shows a block diagram of an example of the electrical system of the image reading apparatus according to the present invention. The electrical system comprises a microprocessor (CPU) 10 for performing a scanner process, a ROM 12 for storing control software, a RAM 9 for holding temporary data, a filter controlling unit 11 for switching filters, a sample stage controlling unit 14 for commanding a motor driver 13 to move the sample stage, an analog/digital (A/D) converter 16 for converting a light signal received at the imaging apparatus from an electric signal into a digital signal, a shading correction circuit 17 for correcting the unevenness of lighting, for example, which is present in an initial state at a light-receiving portion or the lighting, a light source controlling unit 19 for controlling the quantity of light of the light source and the switch ON/OFF, an imaging apparatus controlling unit 20 for controlling the imaging apparatus 3, and a USB controller 15 for performing an interface control with the external data processing unit 1, for example.

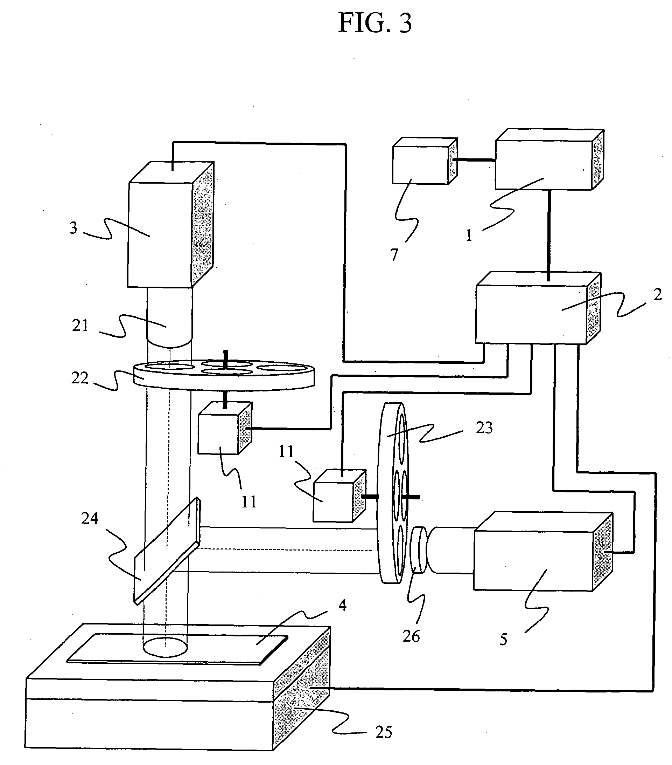

Fig. 3 shows a schematic diagram of an example of the image reading apparatus according to the present invention. A half mirror 24, a fluorescence filter 22, a telecentric lens 21, and the two-dimensional imaging apparatus 3 are disposed on a light path in the vertically upward direction of the sample stage 25. Also, an excitation light filter 23, an excitation light diffusion filter 26, and the light source 5 are disposed on a light path reflected by the half mirror 24. Although the light source is a halogen light source in the present embodiment, the types of the light source are not limited to this. Irradiated light emitted from the light source 5 disposed in the lateral direction relative to the sample stage 25 pass through the light diffuser 26 in order to reduce the unevenness of lighting. The excitation light then passes through the excitation light filter 23, thereby only those wavelengths that are necessary for the excitation of the fluorescence sample 4 are obtained. And then the thus obtained light reaches the half mirror 24 disposed in the vertically upward direction of the sample stage 25. The light path of the excitation light is changed to the vertically downward direction by the half mirror 24 and is irradiated onto the sample 4 to excite fluorescent labeling reagent in the sample.

Fluorescence emitted from the sample 4 passes through the half mirror 24 and only those wavelengths of a reading object are allowed to pass through the fluorescence filter 22. And then the wavelengths are detected by the two-dimensional imaging apparatus 3 disposed on the light path in the vertically upward direction of the sample. A telecentric lens 21 that has very small aberration is attached to the imaging apparatus 3, so that images with small distortion can be obtained.

As a plurality of types of filters are attached to the disk of the excitation light filter 23, the filters can be switched in accordance with a fluorescent labeling reagent for an imaging object. A plurality of filters are also attached to the disk of the fluorescence filter 22 as in the excitation light filter 23, so that the filters can be switched for the most suitable filter that transmits specified fluorescence wavelengths in accordance with an object sample. The sample stage 25 is moved via a step motor by a specified distance as described later in the long side direction of the sample 4 at predetermined intervals.

Images imaged by the two-dimensional imaging apparatus 3 are transferred to the data processing unit 1 via the control substrate 2. The light source 5, the sample stage 25, the imaging apparatus 3, and the filter controlling unit 11 are controlled by the control substrate 2. The control substrate 2 is controlled by the data processing unit 1. The data processing unit 1 is connected to the printer 7 for printing the images.

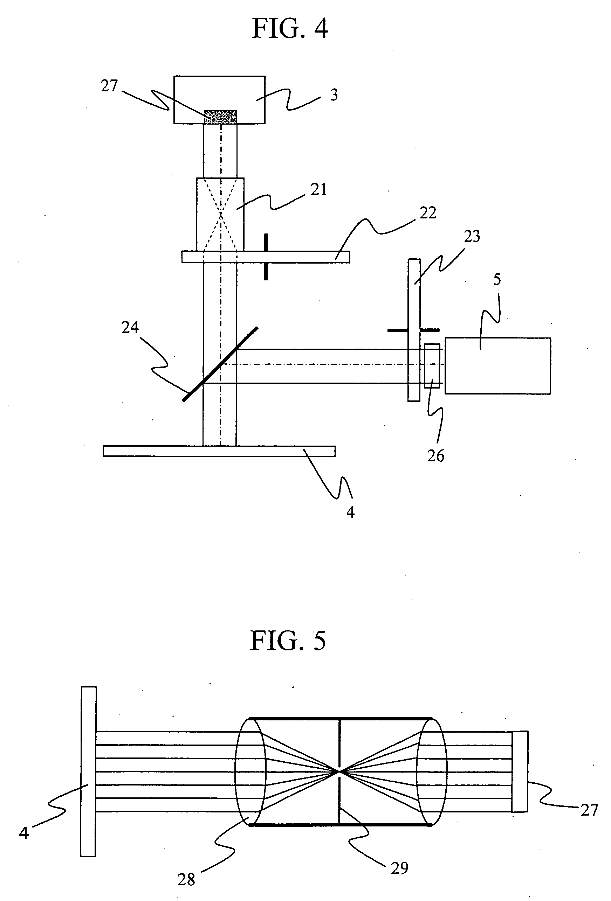

Fig. 4 shows an illustration to describe an example of the optical system. Light irradiated from the light source 5 is rendered to be a light with only those specified wavelengths by the filter 23 for excitation. For example, when detecting Cy3 as a fluorescent labeling reagent, such an excitation filter as to allow only light around 550 nm to pass is used, since the peak of excitation wavelength of Cy3 is 550 nm. Thereafter, the excitation light is irradiated onto the sample 4 by an excitation light/fluorescence separation filter. Although the half mirror 24 is used for the excitation light/fluorescence separation filter in the present embodiment, a dichroic mirror that has such characteristics as to reflect the excitation light and allow the fluorescence to pass can be used.

The excitation light irradiated onto the sample 4 excites a fluorescent reagent included in the sample 4 and generates fluorescence. The fluorescence generated from the sample 4 passes through the half mirror 24, and then the light noise of excess wavelengths is cut by the fluorescence filter 22, thereby being guided to the telecentric lens 21.

Fig. 5 shows an illustration to describe the telecentric lens. The telecentric lens has characteristics that ordinary lens does not have. Light that entered parallel to a convex lens passes through the focal point of the lens. Also, when the light that came out from the focal point passes through the convex lens, the light becomes parallel. By using this principle, only parallel light can be allowed to pass by disposing a diaphragm 29 on the focal points of the two convex lenses. In this case, the telecentric lens allows more closely parallel light to pass in proportion as the diameter of the diaphragm 29 becomes small. Due to the characteristics of allowing only parallel light to pass, the angle of view of the telecentric lens becomes zero, so that the size of an object viewed on an imaging side is constant regardless of the distance between the lens and the object. Thus, when fluorescence is emitted from the sample 4, only light that is parallel to the optical axis of a lens 28 is allowed to pass through the diaphragm 29, and is irradiated as parallel light onto an imaging area 27 of the imaging apparatus 3.

Moreover, when the sample 4 is imaged, distortion is not generated in the center and the peripheral portions of the lens, since telecentric lens has very small aberration between the central portion and the peripheral portions of the lens. Also, regarding noise such as a fluorescent leak from the peripheral portions and scattered light, which is problematic when measuring the sample 4, light leading to the noise cannot pass through the telecentric lens, since the light is not parallel to the optical axis of the lens 28. Therefore, the noise can be reduced drastically as compared with a case where imaging is performed with an ordinary lens. This is very useful for the present apparatus in which the area of the sample 4 and the fluorescence intensity must be measured precisely.

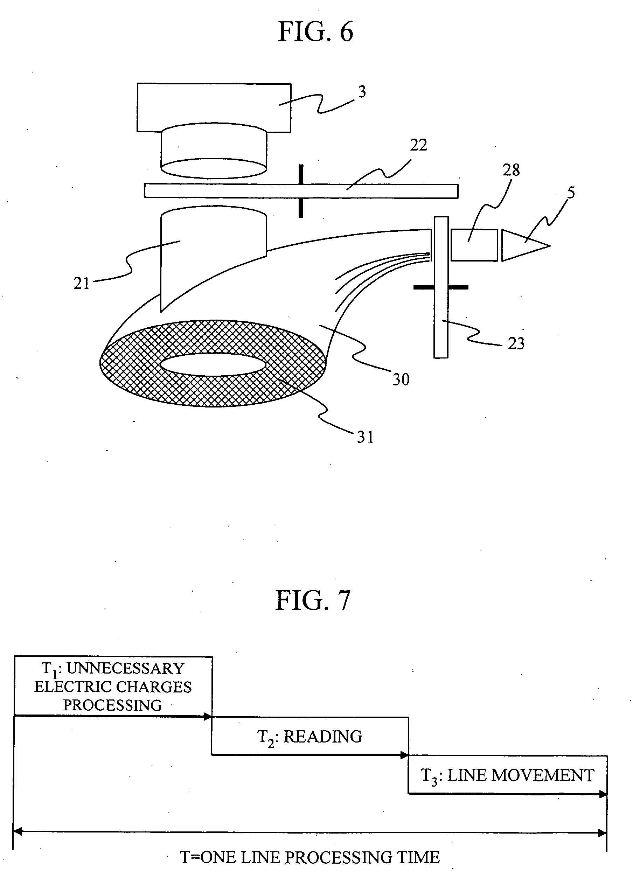

Fig. 6 shows an example of a method for irradiating excitation light using optical fibers. Excitation light emitted from the light source 5 is condensed by the lens 28, allowed to pass through the excitation light filter 23, guided by a bundle of optical fibers 30, and then irradiated onto the sample from an excitation light irradiating area 31 at the tip of the bundle of optical fibers 30. The excitation light irradiating area 31 is disposed horizontally in the vertically upward direction relative to the sample area. The excitation light irradiating area 31 of the bundle of optical fibers 30 is disposed concentrically with the telecentric lens 21. Fluorescence on the sample area excited by the excitation light passes through the telecentric lens 21. Then, only such light with specified wavelengths is selected and allowed to pass by the fluorescence filter 22, and then imaged by the imaging apparatus 3.

As the example of the image reading apparatus in Fig. 3 and the example of the optical system in the illustration of Fig. 4 use the half mirrors 24, the quantity of light of excitation light is attenuated by half upon passing through the half mirror in principle. Also, fluorescence emitted from the sample 4 is attenuated by half upon passing through the half mirror. By contrast, in the optical system using the bundle of optical fibers 30 shown in Fig. 6, the attenuation rate of the excitation light is reduced as compared with the case where the half mirror is used, since the light transmittance of the optical fiber is high. Further, fluorescence twice as much as the case where the half mirror is used can be detected in principle, since the fluorescence emitted from the sample 4 does not pass through the half mirror.

Fig. 7 shows an illustration to describe a time chart when imaging is performed. The imaging apparatus shown as an example of the present apparatus is a mechanism by which electric charges accumulated in the imaging area are taken out by scanning each array of imaging devices. The reading of the sample 4 is performed by repeating an operation where the process of the imaging apparatus and the movement of the sample stage 25 are counted as one cycle. A time to spend the one cycle is treated as one line processing time T. The one line processing time T comprises three operations of an unnecessary electric charges processing time t1 for the imaging area, a reading time t2, and a line movement time t3. When the imaging apparatus 3 finishes the reading of all the pixels, the sample stage 25 is moved by a specified distance. The movement distance in this case is equal to the length of one side of a field on the sample area imaged by one imaging device of the imaging area. The distance is referred to as a movement distance for one line.

The cycle of reading by the imaging apparatus is described in detail below. In time t1, the imaging apparatus processes unnecessary electric charges accumulated in the imaging area for the following reading. In time t2, the imaging apparatus then accumulates fluorescence that entered the imaging area as electric charges and detects the fluorescence. Lastly, in time t3, the sample stage 25 is moved by the movement distance for one line, thereby one cycle of one line processing time T is completed.

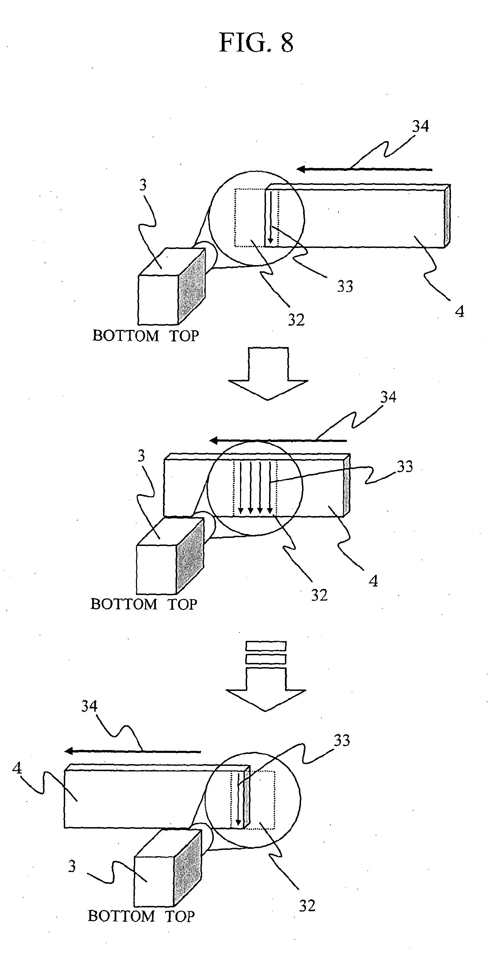

Fig. 8 shows illustrations of the start location and the end location of the reading of the sample 4, and the outline of a reading method. In the imaging area 27 of the imaging apparatus 3, a side that has an imaging pixel (imaging device) array to be first scanned for electric charges is treated as the upward direction of the imaging apparatus 3. The sample (slide glass) 4 is disposed on the sample stage 25 such that the long sides are at right angles to the scanning direction 33 of the imaging area 27, and is moved from upward to downward on the imaging area by the sample stage moving motor 6. The movement direction is shown as a sample movement direction 34.

The movement distance of the sample 4 in this case is referred to as the movement distance for one line. The movement distance for one line corresponds to the width of one pixel of the imaging pixel array on the imaging area, and the distance is equivalent to the resolution of an image. In the present embodiment, the resolution is 20 µm and the movement distance for one line is also 20 µm.

Imaging starts from a location where the imaging pixel array at the upper end of the imaging area is overlapped with the sample area. When the reading cycle for the first one line ends, data transferred from the imaging apparatus 3 is converted by the A/D converter 16. Thereafter, the unevenness of lighting, for example, is corrected by the shading correction circuit 17, and then the data is accumulated in the RAM 9 of the control substrate 2. Then, the sample 4 is moved by the movement distance for one line in the sample movement direction 34, and the reading of a second cycle starts. In the second cycle, the imaging pixels of the first array of the imaging area correspond to the second line of the sample 4, and the imaging pixels of the second array of the imaging area correspond to the first line of the sample 4. When the reading of the second cycle ends, a read image is accumulated in the RAM 9 in the same manner as in the first cycle. The reading of the sample 4 is repeated using the cycle of one line processing time T until the reading of the entire sample area ends, and the image read in each cycle is accumulated in the RAM 9, respectively. By this reading process, each imaging pixel of the imaging area reads all the fields arrayed in the sample movement direction 34, the fields corresponding to the fluorescence sample 4. And images, each dislocated by one line of the sample area in the sample movement direction 34, are accumulated in the RAM 9 as many as the number of repeated reading cycles.

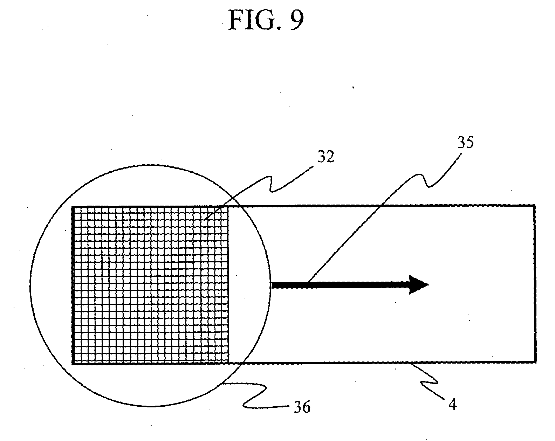

Fig. 9 shows an illustration of the correspondence between the sample 4 and each pixel of a valid imaging range 32 in the imaging area 27. An excitation light irradiation range 36 has an irradiation area larger than the valid imaging range 32. The imaging pixels are disposed on the imaging area in a two-dimensional planar manner, and the light intensity of an image in each pixel is detected as an electric signal, the image being projected on the imaging area. Fig. 9 schematically shows the fields on the sample area that correspond to each imaging pixel of the imaging area 27. Each square divided in a grid on the valid imaging range 32 is a field that corresponds to each imaging pixel. In the embodiment of the present apparatus, the length of one side of each square corresponds to the resolution, namely, 20 µm each. A relative movement direction 35 of the imaging range of the valid imaging range 32 is shown in Fig. 9 on the basis of the sample 4. The movement distance for one line in the reading cycle is one square, namely, 20 µm.

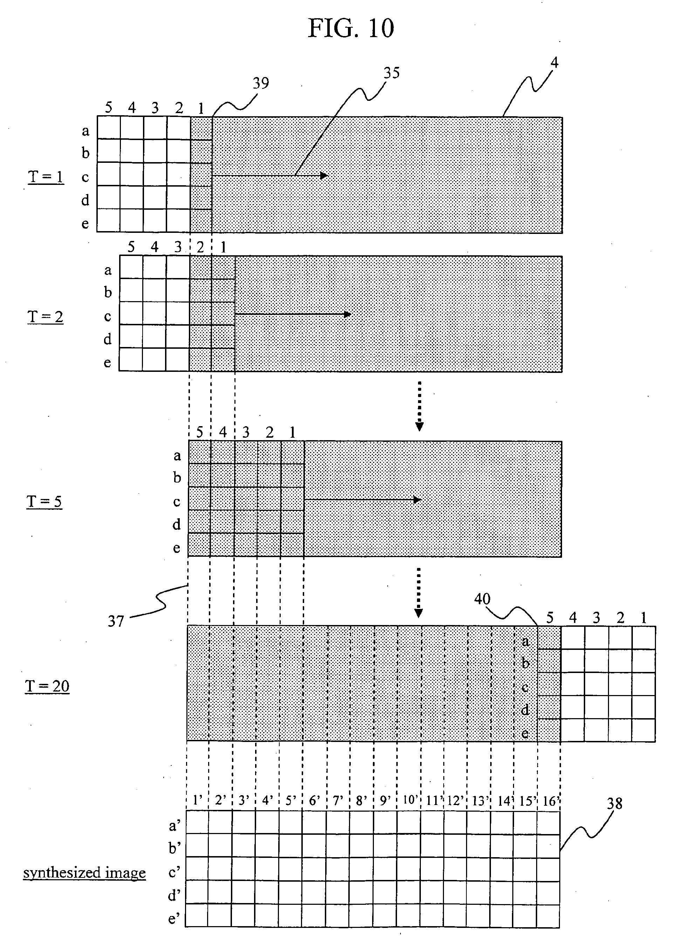

Fig. 10 shows the correspondence between the sample 4 and the pixels on the imaging area 27 when generating a synthesized image. In this case, the imaging pixels of the imaging area 27 are composed of five pixels in height and five pixels in width totaling 25 pixels for the sake of simplicity, and description is made using a resolution of 5 mm upon reading. In this case, the object of reading range for the fluorescence sample 4 is 80 mm in width and 25 mm in height. The vertical imaging pixel arrays of the imaging area 27 are 1, 2, 3, 4, and 5 from right and the horizontal imaging pixel arrays are a, b, c, d, and e from top. A location where an imaging pixel array 1 is overlapped with the left end of the sample is a reading start location 39 and a time thereof is represented by T=1. The imaging range is moved from the left end to the right end relative to the sample, and a location where an imaging pixel array 5 is overlapped with the right end of the sample is a reading end location 40. The imaging range is moved in the right direction relative to the sample by time T=1 and reaches the reading end location 40 at T=20.

In time T=1, electric charges accumulated in each imaging pixel of the imaging area 27 are taken out, A/D converted, and then numerical values thereof are accumulated in the RAM 9. After the transfer to the RAM 9, the imaging range is moved by one pixel in the relative movement direction 35 of the imaging range (T=2). In T=2, the electric charges of the imaging area are transferred to the memory again and this operation is repeated until T=20.

As the object of reading range for the fluorescence sample 4 is 80 mm in width and 25 mm in height, it is constructed as an image composed of 16 pixels in width and 5 pixels in height totaling 80 pixels. The configuration of the pixels can be represented as a synthesized image grid 38 in Fig. 10. The synthesized image grid has vertical pixel arrays of 1', 2', 3', 4' ... and 16' from left and horizontal pixel arrays of a', b', c', d', and e' from top.

At the time of the end of the reading in T=20, 20 images are accumulated in the RAM 9. As each image is imaged while dislocating the sample area by one pixel, an average is calculated by taking out each pixel value of the image and integrating all the pixel values that correspond to the same location of the sample area. By performing this process for all the pixels that correspond to the sample area, a synthesized image of averages calculated from the 20 images can be obtained.

In Fig. 10, pixel array 1 of the imaging pixels imaged at T=1 is accumulated in corresponding pixel array 1' of the synthesized image grid 38 along an image element grid. When an image is imaged at T=2, pixel array 1 is accumulated in pixel array 2' and pixel array 2 is accumulated in pixel array 1' along the image element grid in the same manner as at T=1. At T=5, pixel arrays 1, 2, 3, 4, and 5 are accumulated in pixel arrays 5', 4', 3', 2', and 1', respectively. At T=20, pixel array 5 is accumulated in pixel array 16'.

Data transferred from the imaging apparatus 3 is converted by the A/D converter 16. Thereafter, the unevenness of lighting, for example, is corrected by the shading correction circuit 17, and then the data is accumulated in the RAM 9. The accumulated images are subjected to the integration and the average calculation of each pixel by the CPU 10 and transferred to the data processing unit 1 via a USB interface. Software for image analysis is installed in the data processing unit 1, so that various types of statistical analysis of images can be performed.

As each pixel of the synthesized image is composed of data read in all the lateral imaging pixel arrays of the imaging area 27, even if there is difference of sensitivity in the lateral imaging pixel arrays of the imaging area, an influence thereof can be minimized by averaging. In other words, the image is synthesized per one line using data read in all the lines of the imaging area, so that the image is not affected by the unevenness of lighting in the movement direction of the sample as compared with the case where imaging is performed while moving by one imaging area, and then image synthesis is performed afterward. Moreover, an emission leak from the adjacent pixels can be prevented by using the telecentric lens that allows only closely parallel light to pass.

Further, unconformity is not generated in the joints of the image and difference of brightness among divided images cannot be observed as compared with a case where the sample 4 shown in Fig. 10 is divided in four pieces for imaging and synthesis.

## Claims

1. An image reading apparatus comprising:
a sample stage (25) for holding a sample (4);
a two-dimensional imaging apparatus (3) for imaging the sample held by said sample stage (25);
a sample stage driving unit (6) for moving said sample stage by the distance that corresponds to the width of one pixel of a sample image imaged by said two-dimensional imaging apparatus;
a memory unit (8) for storing a plurality of images imaged by said two-dimensional imaging apparatus (3), the imaging fields of the plurality of images being displaced by the distance that corresponds to the width of one pixel; and
an image synthesis unit (38) for synthesizing the sample image by obtaining an average of a plurality of pixel values for individual locations on the sample (4) from the plurality of images stored in said memory unit (8), and then by using the average pixel values thereof.

2. The image reading apparatus according to claim 1, wherein said two-dimensional imaging apparatus (3) images the sample (4) via a telecentric optical system.

3. The image reading apparatus according to claim 1 or 2, further comprising a light source (5), an excitation light filter (23), an irradiation optical system (24) for irradiating a light passed through said excitation light filter (23) from said light source (5) onto the sample (4), and a fluorescence filter (22) that allows fluorescence from the sample to pass, said fluorescence filter being disposed between the sample (4) and said two-dimensional imaging apparatus (3).

4. An image reading method comprising:
a first step for imaging a sample image by a two-dimensional imaging apparatus (3);
a second step for moving a sample (4) by the distance that corresponds to the width of one pixel of the sample image to be imaged by said two-dimensional imaging apparatus;
a step for storing a plurality of images by repeating said first step and said second step for predetermined times;
a step for obtaining an average of a plurality of pixel values for the individual locations on the sample by integrating the pixel values of the plurality of images in each corresponding pixel while dislocating each image by one line; and
a step for synthesizing the sample image based on the average pixel values in the individual locations on the sample.

5. The image reading method according to claim 4, wherein said two-dimensional imaging apparatus images the sample via a telecentric optical system.

6. The image reading method according to claim 4 or 5, wherein said first step and said second step are repeated such that the entire area of the imaging fields of the sample is imaged in the direction perpendicular to all the scanning lines of said two-dimensional imaging apparatus.
